Europäisches Patentamt

European Patent Office

Office européen des brevets

(19)

(11) Veröffentlichungsnummer: **0 407 723 B1**

# (12) EUROPÄISCHE PATENTSCHRIFT

(45) Veröffentlichungstag der Patentschrift:
27.12.91 Patentblatt 91/52

(51) Int. Cl.$^5$: **A01B 33/14**

(21) Anmeldenummer: **90110412.5**

(22) Anmeldetag: **01.06.90**

(54) **Kreiselegge.**

(30) Priorität: **14.07.89 DE 3923221**

(43) Veröffentlichungstag der Anmeldung:
**16.01.91 Patentblatt 91/03**

(45) Bekanntmachung des Hinweises auf die
Patenterteilung:
**27.12.91 Patentblatt 91/52**

(84) Benannte Vertragsstaaten:
**DE FR GB NL**

(56) Entgegenhaltungen:
**DE-A- 1 903 300**

(56) Entgegenhaltungen:
**DE-A- 3 543 554**
**US-A- 2 574 772**
**US-A- 3 084 748**
**US-A- 4 293 041**

(73) Patentinhaber: **Amazonen-Werke H. Dreyer
GmbH & Co. KG
Am Amazonenwerk 9-13
W-4507 Hasbergen-Gaste (DE)**

(72) Erfinder: **Gattermann, Bernd
Eichewall 3
W-2872 Hude 1 (DE)**
Erfinder: **Gieseke, Reinhard
Eichenwall 4
W-2872 Hude 1 (DE)**

## Beschreibung

Die Erfindung betrifft eine Kreiselegge gemäß des Oberbegriffes des Patentanspruches 1.

Eine derartige Kreiselegge ist beispielsweise durch die deutsche Offenlegungsschrift 3543554 bekannt geworden. Bei dieser Kreiselegge weisen die Werkzeugkreisel die Werkzeugträger und daran befestigte federnde Zinken auf, die mit ihrem Befestigungsteil in radialer Richtung angeordneten Taschen angeordnet sind und die in diesen mittels eines Bolzens gehalten werden. Innerhalb der radialen Taschen können die Befestigungsteile sich wie eine Torsionsfeder verdrehen, so daß die Zinken beim Auftreffen auf in dem Boden festsitzenden Hindemissen etwas nach hinten federnd ausweichen können, so daß sie nicht mit voller Wucht auf die Hindemisse aufprallen. Die an dem Werkzeugträger befestigten Zinken sind jeweils als Einzelzinken ausgebildet. Die gesamte Ausbildung des Werkzeugkreisels und die Anordnung der federnden Zinken hat sich in der Praxis auch bei schwersten Einsatzfällen bewährt. Die Ausbildung des Werkzeugträgers ist relativ teuer, was bei dem Einsatz der Kreiselegg für schwierigste Einsatzfälle zu vertreten ist, Beim Einsatz der Kreiselegge in leichteren Verhältnissen ist diese kostenaufwendige Befestigung nicht in jedem Falle zu vertreten.

Die US-PS 3084748 zeigt eine Bodenbearbeitungsmaschine mit um senkrechte Achsen umlaufende Werkzeugkreisel. An den Werkzeugkreiseln sind Zinken angeordnet. Die Zinken sind als Doppelzinken ausgebildet und werden mittels einer einzigen Schraube an dem Werkzeugträger gehalten. nachteilig ist hierbei, daß die Zinken starr an dem Werkzeugträger befestigt sind und die Befestigung relativ aufwendig gestaltet ist.

Die US-PS 2574772 zeigt eine Bodenfräse mit um eine horizontale Achse umlaufenden Werkzeugen. Die Werkzeuge sind mittels einer Schraube an der Antriebswelle befestigt.

Der Erfindung liegt daher die Aufgabe zugrunde, die Zinkenbefestigung und die Ausbildung der Zinken wesentlich zu vereinfachen, wobei jedoch die Vorteile der bekannten Zinkenbefestigung erhalten bleiben sollen.

Diese Aufgabe wird erfindungsgemäß durch die Maßnahmen gemäß Anspruch 1 gelöst. Infolge dieser Maßnahme wird die Vorraussetzung für eine äußerst kostengünstige Zinkenbefestigung der federnden Zinken erreicht. Der Quersteg des Zinkens wird also mittels einer Schraube, vorzugsweise in seiner Mitte, an dem Werkzeugträger befestigt, so daß die Hälfte des Quersteges des Zinkens sich elastisch verdrehen kann, so daß auf einfache Weise eine Federung des Zinkens erreicht wird. Auf einfachste Weise wird eine sichere Befestigung des Zinkens, insbesondere eine sichere Mitnahme des Zinkens von dem Werkzeugträger dadurch gewährleistet, daß der Werkzeugträger auf seiner Unterseite aufrechte Stege aufweist, daß zur Befestigung des Doppelzinkens eine im Querschnitt U-förmige Tasche vorgesehen ist, welche mittels der zentral angeordneten Schraube an dem Werkzeugträger befestigt ist und den Doppelzinken hält. Hierdurch ist sichergestellt, daß der Zinken lagesicher an dem Werkzeugträger befestigt ist, und daß der Quersteg des Zinkens nicht über seine elastische Streckgrenze hinaus verformt wird. In vorteilhafter Weise ist hierbei vorgesehen, daß von der U-förmigen Klemmhalterung und dem Werkzeugträger eine Tasche gebildet wird, in welcher der Quersteg des Doppelzinkens liegt, und daß die Tasche eine Öffnung bildet, die sich von der Mitte nach Außen erstreckt und sich nach Außen X-förmig erweitert, in welcher sich der Quersteg des Doppelzinkens elastisch verdrehen kann. Hierdurch wird in einfachster Weise die bekannte Zinkenbefestigung auf kostengünstige Weise in erfindungs gemäßer Weise weiter gebildet.

Um den Werkzeugträger universell zur Zinkenbefestigung einsetzen zu können, insbesondere um an dem Werkzeugträger auch die kostengünstigere Version eines Doppelzinkens, der sich nicht federnd verdrehen kann, anordnen zu können, ist erfindungsgemäß vorgesehen, daß die an dem Werkzeugträger befestigten senkrechten Stege sich nur im Außenbereich des Werkzeugträgers befinden und im Mittelbereich unterbrochen sind, und daß in Verlängerung dieser Unterbrechung im Außenbereich zusätzliche Bohrungen angeordnet sind, und daß durch diese Bohrungen Schraubbolzen steckbar sind, an welche der Quersteg des Doppelzinkens oder der Quersteg der Zinken anaubar ist. Hierdurch ist der Werkzeugträger universell einsetzbar.

Weitere Einzelheiten der Erfindung sind der Beispielsbeschreibung und den Zeichnungen zu entnehmen. Hierbei zeigen

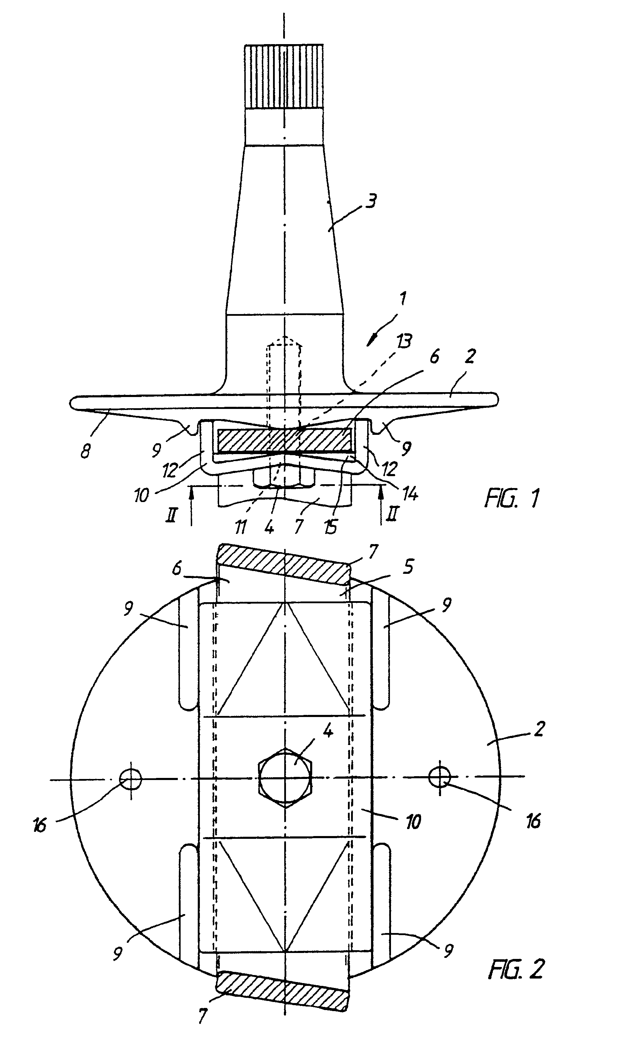

Fig. 1      den Werkzeugkreisel einer Kreiselegge in Vorderansicht und

Fig. 2      den Werkzeugkreisel in der Ansicht von unten gemäß Ansicht II-II.

Die Kreiselegge weist in bekannter und daher nicht näher dargestellter Weise einen sich quer zur Fahrtrichtung erstreckenden Querträger auf, in dem in Reihe nebeneinander die zwangsläufig angetriebenen Werkzeugkreisel 1 angeordnet sind. Diese Werkzeugkreisel 1 sind in dem Querträger gelagert. Der Werkzeugkreisel 1 weist die an dem Werkzeugträger 2 angeschmiedete Kreiselwelle 3 auf. An dem Werkzeugträger 2 ist jeweils mittels der zentral angeordneten Schraube 4 ein sogenannter Doppelzinken 5 angeordnet. Der Doppelzinken 5 weist den Quersteg 6 und die nach unten sich erstreckenden als Bodenbearbeitungswerkzeuge ausgebildeten Zinken 7 auf. Auf der Unterseite 8 des Werkzeugträgers 2 befinden sich die aufrechten Stege 9. Diese Stege 9 befinden sich nur im Außenbereich des Werkzeugträgers 2 und sind daher im Mittelbereich des Werkzeugträgers 2 unterbrochen.

Zur Befestigung des Doppelzinkens 5 ist auf der Unterseite 8 des Werkzeugträgers 2 eine über zumindest annähernd die gesamte Breite des Werkzeugträgers 2 sich erstreckende und einen U-förmigen Querschnitt aufweisende Tasche 10 vorgesehen. Diese Tasche 10 weist in ihrer Mitte die Bohrung 11 auf, durch welche der Schraubbolzen 4 gesteckt ist. Mittels des Schraubbolzens 4 ist die U-förmige Tasche 10 an dem Werkzeugträger 2 befestigt. Über die D-förmige Tasche 10 und dem Schraubbolzen 4 wird der Doppelzinken 5 an dem Werkzeugträger 2 gehalten. Die senkrechten Stege 12 der U-förmigen Tasche 10 befinden sich jeweils zwischen zwei gegenüber liegenden aufrechten Stegen 9, die an dem Werkzeugträger 2 angeordnet sind, um ein Verdrehen der U-förmigen Tasche 10 und des Quersteges 6 des doppelförmigen Zinkens zu verhindern. Die Bohrung 13 in dem Quersteg 6, welche von dem Schraubbolzen 6 durchsetzt ist, weist einen wesentlich größeren Durchmesser als den Schraubbolzen 6 auf. Von der U-förmigen Tasche 10, die eine Klemmhalterung bildet und dem Werkzeugträger 2 wird eine geschlossene Tasche 14 gebildet. Diese Tasche 14 bildet eine Öffnung 15, die sich etwa von der Mitte nach außen erstreckt und sich nach außen X-förmig erweitert. In dieser sich nach außen X-förmig erweiternden Öffnung 15 kann sich der Quersteg 6 des Doppelzinkens 5 elastisch verdrehen, so daß die Zinken 7 in einem begrenzten Umfang elastisch federn können.

Des weiteren befinden sich in dem Werkzeugträger 2 noch die beiden zusätzlichen Bohrungen 16. Diese beiden Bohrungen 16 befinden sich in Verlängerung der Unterbrechung der Stege 9 und in dem äußeren Bereich des Werkzeugträgers 2. Durch diese Bohrungen 16 sind Schraubbolzen steckbar, mittels welcher die Querstege von Doppelzinken oder Querstege anderer Zinken starr zu befestigen sind.

## Patentansprüche

1. Kreiselegge mit einem Querträger, in dem quer zur Fahrtrichtung nebeneinander mehrere Werkzeugkreisel angeordnet sind, die einen Werkzeugträger und daran befestigte federnde Zinken aufweisen, dadurch gekennzeichnet, daß die Zinken (7) als Doppelzinken (5) ausgebildet sind und mittels einer einzigen Schraube (4) an dem Werkzeugträger (2) gehalten werden, daß der Werkzeugträger (2) auf seiner Unterseite (8) aufrechte Stege (9) aufweist und daß zur Befestigung des Doppelzinkens (5) eine im Querschnitt U-förmige Tasche (10) vorgesehen ist, welche mittels einer zentral angeordneten Schraube (4) an dem Werkzeugträger (2) befestigt ist und den Doppelzinken (5) hält.

2. Kreiselegge nach Anspruch 1, dadurch gekennzeichnet, daß von derr U-förmigen Klemmhalterungstasche (10) und dem Werkzeugträger (2) eine geschlossene Tasche (14) gebildet wird, in welcher der Quersteg (6) des Doppelzinkens (5) liegt, und daß die Tasche (14) eine Öffnung (15) bildet, die von der Mitte nach außen erstreckt und sich nach außen X-förmig erweitert, in welcher sich der Quersteg (6) des Doppelzinkens (5) elastisch verdrehen kann.

3. Kreiseleggge nach einem oder mehreren der vorstehenden Ansprüche, dadurch gekennzeichnet, daß die an dem Werkzeugträger (2) befestigten senkrechten Stege (9) sich nur im Außenbereich des Werkzeugträgers (2) befinden und im Mittelbereich unterbrochen sind, daß in Verlängerung dieser Unterbrechung im äußeren Bereich des Werkzeugträger (2) zusätzliche Bohrungen (16) angeordnet sind, und daß durch diese Bohrungen (16) Schraubbolzen steckbar sind, an welche der Quersteg des Doppelzinkens oder der Quersteg der Zinken anschraubbar ist.

## Claims

1. A rotary harrow with a transverse carrier, in which there are disposed next to one another and transversely to the the direction of travel, a plurality of rotary tools which each have a tool holder and resilient tines attached thereto, characterised in that the tines (7) on the tool holder (2) are in the form of double tines (5) and are secured by means of a single screw (4), that the tool holder (2) has on its underside (8) vertical ribs (9), and that, in order to attach the double tine (5), there is provided a trap (10) which has a U-shaped cross-section, said trap (10) being secured to the tool holder (2) by means of a centrally-disposed screw (4), and secures the double tine (5).

2. A rotary harrow according to Claim 1, characterised in that the U-shaped clamping trap (10) and the tool holder (2) together form an enclosing cavity (14) in which the crosspiece (6) of the double tine (5) lies, and that the cavity (14) forms a space (15) which extends from the centre outwards and expands in an X shape in the outward direction, and in which the crosspiece (6) of the double tine (5) can twist elastically.

3. A rotary harrow according to one or more of the foregoing Claims, characterised in that the vertical ribs (9) attached to the tool holder (2) are located only in the outer region of the tool holder (2) and are interrupted in the central region, that in elongation of this interruption, there are disposed in the outer region of the tool holder (2) additional holes (16), and that through these holes (16) screw bolts may be inserted, on to which the crosspiece of the double tine or the crosspiece of the tines may be screwed.

## Revendications

1. Herse rotative comprenant une traverse munie de plusieurs rotors juxtaposés dans la direction transversale à la direction de déplacement, ces rotors comportant un porte-outil auquel sont fixées des dents élastiques, herse rotative caractérisée en ce que les dents (7) sont des doubles dents (5) et sont maintenues par un seul boulon (4) sur le porte-outil (2), et en ce que le porte-outil (2) comporte sur sa face inférieure (8) des nervures (9), et en ce que pour fixer la double dent (5) il est prévu une cavité (10) à section en forme d'U qui est fixée elle même, sur le porte-outil (2) par un boulon (4) central, la cavité maintenant la double dent (5).

2. Herse rotative selon la revendication 1, caractérisée en ce que la cavité de fixation (10) en forme d'U et le porte-outil (2), constituent une cavité fermée (14) recevant la traverse (6) de la double dent (5), et en ce que la poche (14) forme un espace (15) qui s'étend vers l'extérieur à partir du milieu, en s'élargissant vers l'extérieur en forme d'X, cavité dans laquelle la traverse (6) de la double dent (5) peut se tordre élastiquement.

3. Herse rotative selon une ou plusieurs des revendications précédentes, caractérisée en ce que les nervures verticales (9) fixées au porte-outil (2) ne se trouvent que dans la zone extérieure du porte-outil (2) et sont interrompues dans la zone médiane, et en ce que dans le prolongement de cette interruption, dans la partie extérieure du porte-outil (2), on a des perçages supplémentaires (16) qui peuvent recevoir des boulons filetés par lesquels se fixe la traverse de la double dent ou la traverse d'une dent.

FIG. 1

FIG. 2